**Europäisches Patentamt**

**European Patent Office**

**Office européen des brevets**

(19)

(11) Numéro de publication : **0 394 124 B1**

# (12) FASCICULE DE BREVET EUROPEEN

(45) Date de publication du fascicule du brevet :
07.10.92 Bulletin 92/41

(51) Int. Cl.⁵ : **B60J 1/20**

(21) Numéro de dépôt : **90401044.4**

(22) Date de dépôt : **18.04.90**

(54) **Store à enrouleur motorisé.**

(30) Priorité : **19.04.89 FR 8905203**

(43) Date de publication de la demande :
**24.10.90 Bulletin 90/43**

(45) Mention de la délivrance du brevet :
**07.10.92 Bulletin 92/41**

(84) Etats contractants désignés :
**BE CH DE ES GB IT LI LU NL**

(56) Documents cités :
**EP-A- 0 240 747**
**FR-A- 2 588 307**
**GB-A- 570 456**

(73) Titulaire : **Etablissements FARNIER ET PENIN**
**Zone Industrielle No. 2 Route de Poitiers**
**F-79300 Bressuire (FR)**

(72) Inventeur : **Ouvrard, Gaston**
**18 rue Bellefeuille**
**F-79300 Bressuire (FR)**
Inventeur : **Jeuffray, Jean-Marie**
**1 rue des Coulies**
**Terves, F-79300 Bressuire (FR)**

(74) Mandataire : **Fruchard, Guy et al**
**CABINET BOETTCHER 23, rue la Boétie**
**F-75008 Paris (FR)**

EP 0 394 124 B1

**Description**

La présente invention concerne un store à enrouleur motorisé destiné notamment, bien que non exclusivement, à occulter une baie, en particulier une fenêtre de véhicule automobile.

On connaît actuellement plusieurs types de stores à enrouleur motorisés. En particulier on connaît des stores dont les moyens de commande sont formés par des câbles-crémaillères fixés aux extrémités de la barre de tirage et guidés dans des glissières latérales disposées de part et d'autre de la baie à occulter. De tels dispositifs ne sont pas facilement démontables et ne peuvent donc pas être utilisés comme store de vitre arrière pour des véhicules comportant une plage arrière amovible. On connaît également du document GB-A- 570 456 un store dans lequel deux bielles sont montées de façon articulée à la barre de tirage et sont associées à des organes mobiles montés dans le boîtier et entraînés par un mécanisme comportant des câbles passant sur des poulies. Ce mécanisme est d'un encombrement important de sorte qu'un tel store est peu élégant et n'est donc pas susceptible d'être utilisé dans des véhicules de haut de gamme.

Un but de la présente invention est de proposer un store qui soit suffisamment rigide en position déployée tout en étant facilement démontable et pouvant donc être associé à une plage arrière amovible d'un véhicule automobile.

En vue de la réalisation de ce but, on prévoit selon l'invention un store à enrouleur motorisé comportant un boîtier allongé dans lequel est monté au moins un organe d'enroulement, au moins une bande de tissu ayant une extrémité fixée à l'organe d'enroulement et une extrémité opposée fixée à une barre de tirage, et des moyens de commande de position comprenant deux biellettes ayant une longueur égale à environ une demi-longueur du boîtier, chaque biellette ayant une extrémité fixée de façon articulée au voisinage d'une extrémité de la barre de tirage et une extrémité opposée fixée de façon articulée à un organe d'accouplement, caractérisé en ce que l'organe d'accouplement est fixé à une extrémité d'un organe d'entraînement à crémaillère ayant une longueur égale à environ une demi-longueur du boîtier, les deux organes d'entraînement étant disposés de part et d'autre et engagés avec un pignon d'entraînement monté pour tourner dans le boîtier sensiblement à égale distance des extrémités du boîtier et entraîné par un moteur.

Ainsi, lorsque le pignon denté est entraîné en rotation, il fait coulisser les organes d'entraînement à crémaillère dans deux directions opposées et les biellettes se déplacent de façon symétrique par rapport à un plan médian du boîtier jusqu'à une position totalement déployée où les biellettes sont sensiblement parallèles aux bords latéraux de la bande de tissu.

Selon des modes de réalisation avantageux de l'invention, les organes d'entraînement sont des câbles-crémaillères maintenus en engagement avec le pignon d'entraînement par des glissières, et le store comporte des butées de fin de course disposées dans le boîtier en regard des extrémités des organes d'entraînement. Ainsi on s'assure qu'en position déployée l'ensemble présente une rigidité suffisante pour maintenir le store dans cette position.

Selon encore un autre mode de réalisation avantageux de l'invention, le store comporte deux bandes de tissu chacune fixée à un organe d'enroulement, les deux bandes de tissu étant associées à une barre de tirage cintrée commune. Ainsi, en disposant les organes d'enroulement selon un angle, les bandes de tissu prennent une forme voisine d'une vitre galbée et le store peut donc être disposé à proximité d'une telle vitre.

D'autres caractéristiques et avantages de l'invention apparaîtront encore à la lecture de la description qui suit de deux modes de réalisation particuliers non limitatifs de l'invention, en liaison avec les figures ci-joints parmi lesquelles :

– la figure 1 est une vue en élévation schématique d'un premier mode de réalisation de l'invention partiellement en coupe selon la ligne I-I de la figure 2,

– la figure 2 est une vue en coupe selon la ligne II-II de la figure 1,

– la figure 3 est une vue en perspective schématique d'un second mode de réalisation de l'invention.

En référence aux figures, l'enrouleur selon l'invention comporte de façon habituelle un boîtier allongé 1 dans lequel est monté un organe d'enroulement cylindrique 2 rappelé dans un sens d'enroulement par un ressort (non représenté). Une bande de tissu 3 a une de ses extrémités fixée à l'organe d'enroulement 2 et une extrémité opposée fixée à une barre de tirage 4.

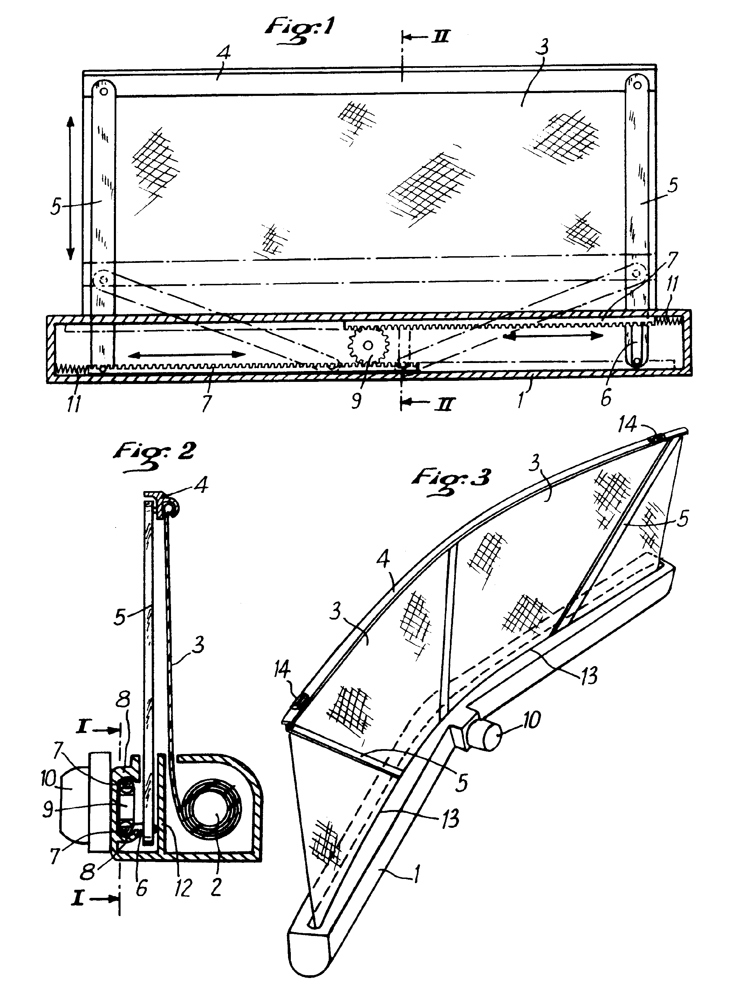

Selon l'invention le store comporte également des moyens de commande de position comprenant deux biellettes 5 ayant une longueur égale à environ à une demi-longueur du boîtier 1. Chaque biellette a une extrémité fixée de façon articulée au voisinage d'une extrémité de la barre de tirage 4 et une extrémité opposée fixée de façon articulée à un organe d'accouplement 6 lui-même fixé à une extrémité d'un organe d'entraînement 7 à crémaillère. Dans le mode de réalisation représenté sur les figures 1 et 2, les organes d'entraînement 7 sont formés par des câbles-crémaillère montés pour coulisser dans des glissières 8 formant partie intégrante du boîtier 1. Les organes d'entraînement 7 sont disposés de part et d'autre d'un pignon d'entraînement 9 monté pour tourner dans le boîtier sensiblement à égale distance des extrémités du boîtier et entraîné par un moto-réducteur 10. L'un des câbles-crémaillère 7 est disposé au-dessus du pignon 9 tandis que l'autre câble-crémaillère 7 est disposé en dessous du pignon 10 de sorte que lorsque le pignon 9 est entraîné en rotation dans un sens, les deux câbles-crémaillères 7 sont déplacés en translation dans des directions opposées. Afin que les axes d'articulation inférieurs des biellettes 5 soient disposés au même niveau et que leurs mouvements soient donc symétriques par rapport à un plan perpendiculaire à la bande de tissu 3 en son milieu, l'organe d'accouplement 6 associé au câble-crémaillère supérieur comporte une partie décalée vers le bas par rapport à celui-ci. De préférence, le store comprend également des butées de fin de course, ici des ressorts 11, disposées dans le boîtier 1 en regard des extrémités des organes d'entraînement 7. Afin d'éviter un frottement des biellettes 5 contre la bande tissu 3 lors des manoeuvres, le boîtier 1 comporte également de préférence une cloison séparatrice 12.

Dans la position repliée représentée en traits mixtes fins sur la Figure 1, les extrémités inférieures des biellettes 5 sont adjacentes au pignon 9 et s'étendent selon une position inclinée. Lorsque le pignon 9 est entraîné pour déplacer les organes d'entraînement 7 vers les extrémités du boîtier, les biellettes se redressent progressivement en déroulant la bande de tissu 3 jusqu'au moment où elles atteignent une position limite sensiblement verticale. Le boîtier 1, les biellettes 5 et la barre de tirage 4 constituent alors un cadre supportant le tissu 3 dans une position déployée.

On notera à ce propos que le store selon l'invention peut être arrêté en position intermédiaire et, quelque soit la position, les biellettes 5 ne viennent à aucun moment en regard de la partie centrale de la bande de tissu 3, de sorte que le store selon l'invention peut être utilisé non seulement comme store de vitre arrière, comme représenté sur les figures, mais également comme pare-soleil pour des vitres latérales ou contre le pare-brise d'un véhicule, le boîtier 1 étant alors de préférence fixé au pavillon supérieur du véhicule avec la barre de tirage 4 disposée en dessous du boîtier afin que la bande de tissu 3 se déroule vers le bas.

La figure 3 illustre un autre mode de réalisation de l'invention dans lequel le boîtier comporte deux parties rectilignes formant un angle l'une par rapport à l'autre et contenant chacune un organe d'enroulement rectiligne associé à une bande de tissu 3, une des extrémités des bandes de tissu 3 étant réliée à une barre de tirage cintrée commune 4. De même que précédemment, les moyens de commande de position comprennent seulement deux biellettes 5 chacune articulées à une extrémité de la barre de tirage commune 4. Dans ce cas, l'axe du moteur 10 est de préférence disposé suivant la bissectrice des deux parties de boîtier rectilignes et les glissières 8 (non représentées sur la figure 3) sont également rectilignes pour guider les biellettes 5 selon un mouvement rectiligne à l'intérieur de la fente de passage 13. Un store de ce type est particulièrement adapté à être utilisé comme store de vitre arrière dans des véhicules comportant des vitres arrière galbées. Afin d'augmenter la rigidité de l'ensemble en position déployée du store, la barre de tirage 4 comporte de préférence des butées 14 qui viennent en appui sur la face intérieure du pavillon du véhicule lorsque le store est déployé.

Bien entendu l'invention n'est pas limitée aux modes de réalisation décrits et on peut y apporter des variantes de réalisation sans sortir du cadre de l'invention telle que révendiquée. En particulier, dans le cas d'un boîtier rectiligne, les organes d'entraînement 7 peuvent être constitués par des tiges rigides.

Afin de minimiser le bruit et d'augmenter la rigidité d' ensemble du store, on peut également prévoir des bourrelets à faible coefficient de frottement au niveau des ouvertures de passage 13 des biellettes 5.

On peut également prévoir des butées de fin de course adjacentes au pignon 9 pour limiter le mouvement des biellettes 5 dans le sens de la rétraction.

**Revendications**

1. Store à enrouleur motorisé comportant un boîtier allongé (1) dans lequel est monté au moins un organe d'enroulement (2), au moins une bande de tissu (3) ayant une extrémité fixée à l'organe d'enroulement (2) et une extrémité opposée fixée à une barre de tirage (4), et des moyens de commande de position comprenant deux biellettes (5) ayant une longueur égale à environ une demi-longueur du boîtier (1), chaque biellette (5) ayant une extrémité fixée de façon articulée au voisinage d'une extrémité de la barre de tirage (4) et une extrémité opposée fixée de façon articulée à un organe d'accouplement (6), caractérisé en ce que l'organe d'accouplement (6) est fixé à une extrémité d'un organe d'entraînement (7) à crémaillère ayant une longueur égale à environ une demi-longueur du boîtier,les deux organes d'entraînement (7) étant disposés de part et d'autre et engagés avec un pignon d'entraînement (9) monté pour tourner dans le boîtier sensiblement à égale distance des extrémités du boîtier et entraîné par un moteur (10).

2. Store à enrouleur selon la revendication 1 caractérisé en ce que les organes d'entraînement (7) sont des câbles-crémaillères maintenus en engagement avec le pignon d'entraînement (9) par des glissières (8).

3. Store à enrouleur selon la revendication 1 ou la revendication 2 caractérisé en ce qu'il comprend des butées de fin de course (11) disposées dans le boîtier en regard des extrémités des organes d'entraînement.

4. Store à enrouleur selon la revendication 1 ou la revendication 2 caractérisé en ce qu'il comprend des butées de fin de course (14) fixées à la barre de tirage.

5. Store à enrouleur selon l'une des revendications 1 à 4 caractérisé en ce qu'il comporte deux bandes de tissu chacune fixée à un organe d'enroulement, les deux bandes de tissu (3) étant associées à une barre de tirage cintrée commune (4).

## Patentansprüche

1. Aufrollbarer Rollo mit Motorantrieb, umfassend einen länglichen Kasten (1), in welchem wenigstens ein Aufrollorgan (2) angeordnet ist, ferner eine Gewebebahn (3), deren eines Ende mit dem Aufrollorgan (2) verbunden ist, und deren anderes, diesem abgewandtes Ende an einer Zugstange (4) befestigt ist, und Positionseinstellmittel mit zwei Schwenkarmen (5), welche eine ungefähr einer halben Länge des Kastens (1) entsprechende Länge haben, wobei ein Ende jedes Schwenkarmes (5) in der Nähe eines Endes der Zugstange (4) gelenkig befestigt und das andere Ende an einem Kupplungsorgan gelenkig befestigt ist, dadurch **gekennzeichnet**, daß das Kupplungsorgan (6) an einem Ende eines als Zahnstange ausgebildeten Antriebsorgans (7) befestigt ist, welches eine ungefähr einer halben Länge des Kastens (1) entsprechende Länge hat, wobei die beiden Antriebsorgane (7) zu beiden Seiten eines Antriebszahnrades (9) angeordnet und mit diesem im Eingriff sind, welches im Kasten drehbar und mit im wesentlichen gleichem Abstand zu den Enden des Kastens angeordnet und von einem Motor antreibbar ist.

2. Aufrollbarer Rollo nach Anspruch 1, dadurch **gekennzeichnet**, daß die Antriebsorgane (7) Zahnstangen-Kabel sind, die mittels Gleitführungen (8) im Eingriff mit dem Antriebszahnrad (9) gehalten werden.

3. Aufrollbarer Rollo nach Anspruch 1 oder 2, dadurch **gekennzeichnet**, daß er Wegbegrenzungsanschläge (11) umfaßt, welche in dem Kasten im Bereich der Enden der Antriebsorgane angeordnet sind.

4. Aufrollbarer Rollo nach Anspruch 1 oder 2, dadurch **gekennzeichnet**, daß er Wegbegrenzungsanschläge (14) umfaßt, welche an der Zugstange befestigt sind.

5. Aufrollbarer Rollo nach einem der Ansprüche 1 bis 4, dadurch **gekennzeichnet**, daß er zwei Gewebebahnen umfaßt, die jeweils mit einem Aufrollorgan verbunden sind, wobei die beiden Gewebebahnen (3) einer gemeinsamen gebogenen Zugstange (4) zugeordnet sind.

## Claims

1. A motorized roller blind comprising an elongate housing (1), with at least one roller member (2) disposed therein, at least one strip (3) of fabric having one end fixed to the roller member (2) and an opposite end fixed to a pull bar (4), and position control means, comprising two struts (5) having a length equal to approximately half the length of the housing (1), each strut (5) having one end pivotally connected to the pull bar (4) in the vicinity of one end thereof and an opposite end, pivotally connected to a coupling member (6) characterized in that the coupling member (6) is fixed to one end of a rack drive member (7) having a length equal to approximately half the length of the housing, the two drive members (7) being disposed on respective sides of and engaged with a drive pinion (9) mounted rotatably in the housing substantially at an equal distance from the ends of the housing and driven by a motor (10).

2. A blind as set forth in claim 1 wherein said drive members (7) are cable racks hold in engagement with the drive pinion (9) by guide members (8).

3. A blind as set forth in claim 1 or claim 2 and further including travel limiting abutments (11) disposed in the housing facing said ends of the respective drive members;

4. A blind as set forth in claim 1 or claim 3 and further including travel limiting abutment means (14) on said pull bar.

5. A blind as set forth one of claims 1 to 4 comprising first and second said strips of fabric each fixed to one roller member, the two strips of fabric (3) being associated to a common curved pull bar (4).

EP 0 394 124 B1

Fig:1

Fig: 2

Fig:3